# EUROPEAN PATENT SPECIFICATION

(11) **EP 4 224 407 B1**
(45) Date of publication and mention of the grant of the patent: **17.12.2025**
(21) Application number: 23154179.8
(22) Date of filing: 31.01.2023
(51) Int. Cl.: G06T 3/04, G06T 11/40

(54) **IMAGE PROCESSING SYSTEM AND METHOD**
BILDVERARBEITUNGSSYSTEM UND -VERFAHREN
SYSTÈME ET PROCÉDÉ DE TRAITEMENT D'IMAGE

(30) Priority: 08.02.2022 GB 202201584; 07.07.2022 GB 202209978
(43) Date of publication of application: 09.08.2023
(73) Proprietor: Sony Interactive Entertainment Inc., Tokyo 108-0075 (JP)
(72) Inventor: CONNOR, Patrick, London, W1F 7LP (GB)
(74) Representative: D Young & Co LLP

(56) References cited:
- US-A1- 2015 287 230
- US-A1- 2016 307 297
- NVIDIA: "NVIDIA TURING GPU ARCHITECTURE", 1 January 2018 (2018-01-01), XP055679661, Retrieved from the Internet <URL:https://www.nvidia.com/content/dam/en-zz/Solutions/design-visualization/technologies/turing-architecture/NVIDIA-Turing-Architecture-Whitepaper.pdf> [retrieved on 20200325]

## Description

### Field of the invention

This disclosure relates to an image processing system, computer-implemented method, computer software, and a non-transitory machine-readable storage medium.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

In recent years, the demand for high-quality video and video game content has increased. This is driven in part by the demand for immersive content, such as content for display with a virtual reality (VR) headset, as well as the fact that high-quality displays are more widespread amongst consumers. However, the provision of such content is associated with the requirement for ever-increasing processing power - and this may be problematic when using hardware that is not updated frequently (such as a games console) or is limited in processing power due to other considerations such as cost or portability. The provision of suitably immersive VR content in particular is associated with expensive image processing operations.

It is therefore considered that rather than relying on an increase in the capabilities of the hardware used to generate and provide such content, it may be preferable to optimise the content and/or the content generation process. By optimising the content and/or content generation process, it is anticipated that the amount of processing power that is required is reduced or the quality of content is improved while utilising the same amount of processing power. That is, the ratio of content quality to required processing power may be improved by the optimisation.

One such technique is that of foveal rendering. This comprises the rendering of images for display such that a particular focal area is provided with a higher quality than those areas of the image outside that focal area. The focal area may be determined based upon in-content cues and/or eye gaze tracking (or a prediction of the user's likely gaze position) within the image display area.

The difference in image quality is usually reflected in the reduction of the image resolution in the non-focal areas relative to the focal areas, reducing the resolution of the image as a whole. This can result in a substantial saving in the amount of processing required to generate images for display.

Similar methods may also be considered for non-VR content, or for content display systems in which eye tracking is not available - such content is also a suitable candidate for optimisation, rather than being limited to only gaze-dependent foveal rendering. It is therefore considered that alternative or additional optimisations may be appropriate in the context of generating images for display.

Previously proposed arrangements are disclosed in US 2018/276790 A1.

### SUMMARY OF THE INVENTION

This disclosure is defined by claim 1. Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates a flexible scale rasterization pattern;
Figure 2 schematically illustrates a function defining a parameter for flexible scale rasterization;
Figure 3 schematically illustrates a display rendered using flexible scale rasterization pattern of Figure 1;
Figure 4 schematically illustrates an exemplary method for generating images for display;
Figure 5 schematically illustrates an image processing system operable to generate one or more images for display;
Figure 6 schematically illustrates a method for generating one or more images for display;
Figure 7 schematically illustrates an image processing system operable to generate one or more images for display; and
Figure 8 schematically illustrates a method for generating one or more images for display.

### DESCRIPTION OF THE EMBODIMENTS

Referring now to the drawings, wherein like reference numerals designate identical or corresponding parts throughout the several views, embodiments of the present disclosure are described.

As discussed above, one method of optimising the process of generating content for display is to selectively modify the image quality in different regions of the display image. For example, foveal rendering schemes provide for a method by which the image quality is to be lowered in areas of low visual impact. This can enable a reduction in the processing burden of the image generation process, or the generation of higher-quality content (as judged by a) using the same amount of processing resources.

Flexible scale rasterization (FSR) is an example of a method by which image content may be generated using a varying rasterization rate for different areas of the image content, with the rate being dependent upon the position of each area within the image content.

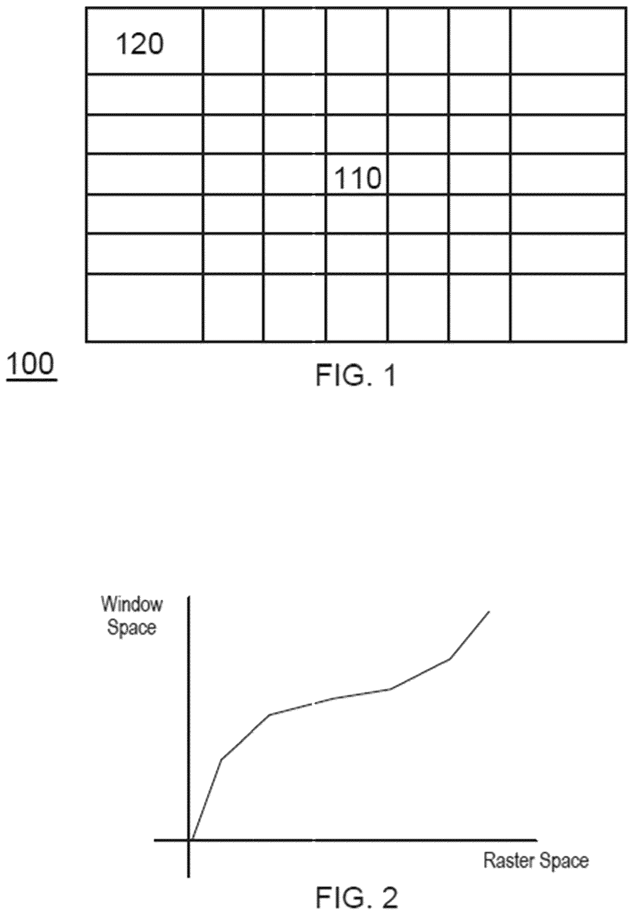

For example, Figure 1 schematically illustrates a visualisation of an FSR encoding scheme to be applied to image generation. The area 100 represents the display screen (referred to as the window space), and it comprises a number of sub-areas such as the sub-areas 110 and 120. Each of the sub-areas represents a respective one of a plurality of same-sized areas of the raster space; that is, the rasterization process provides an equal level of detail for each of the sub-areas shown in Figure 1. As a result, sub-areas having different sizes will have different display resolutions.

In particular, those areas which are smallest in the window space will have the highest level of detail - and the sub-area 120 will have a higher level of detail than the sub-area 110.

FSR may be implemented by defining a function for each axis (horizontal and vertical) that describes the correspondence between window space and raster space for that axis. Figure 2 schematically illustrates an example of such a function.

In Figure 2, the horizontal axis represents the raster space while the vertical axis represents the window space. A curve, formed by a number of straight-line segments, identifies a mapping between the two spaces in a given dimension - of course, a pair of such functions is required to define a mapping for an area. A steeper segment indicates a greater representation of the window space for a given amount of raster space (that is, a lower-resolution area), while a less-steep segment indicates that the given raster space corresponds to a smaller amount of the window space (that is, a higher-resolution area).

In some cases, it is considered that more than two functions may be defined as appropriate, for example so as to generate a more complex distribution of high-/low-resolution areas. In some embodiments, a smoothing is applied to the curve defined by the straight-line segments so as to reduce the appearance of sharp changes in rendering quality.

The generation of these functions may be performed in a number of ways - for example, in dependence upon eye-tracking data for a viewer, in dependence upon one or more elements of the content itself, and/or the properties of a display device for viewing the content. Any method of generating the functions may be considered appropriate, so long as it is possible to identify which regions of the display area should be higher-/lower-quality respectively.

For instance, eye-tracking data may be used to identify which parts of the display (or the content) are of interest to a user, or are being viewed by the user. For example, a display location may be identified, or one or more content elements, that a viewer is focused on. The two (or more) functions should then be defined so as to indicate a lower representation of window space for a given raster space in the area of focus/interest - that is, the function should have less-steep segments at this point.

In the example of defining functions in dependence upon one or more elements of the content itself, it is considered that some objects may be considered to be intrinsically of greater interest than other objects. For example, the protagonist within a computer game (in a third-person view) may be considered to be an element that should be displayed using a high quality representation.

There are a number of properties of a display device for viewing the content that may also (or instead) be considered when identifying image regions that should be rendered with a lower quality. For example, the display may comprise regions with different resolutions, or some parts of the display may not be able to be focused on by a user due to their location (such as a screen or screen area that occupies the user's peripheral in a head-mountable display device).

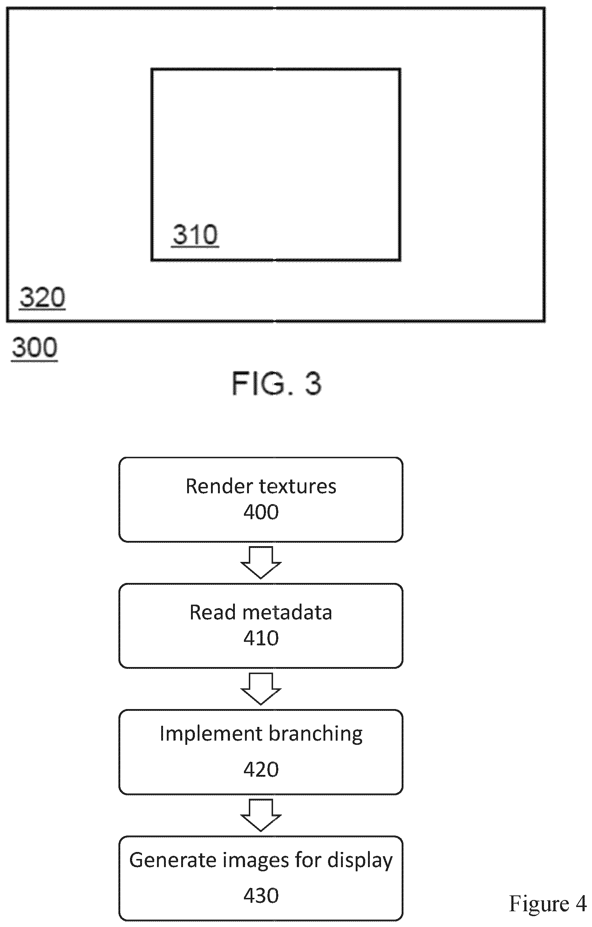

Figure 3 schematically illustrates an example of a screen that displays an image generated according to the FSR encoding scheme of Figure 1. The screen 300 comprises a high-quality area 310 and a low-quality area 320, with these of course being relative terms rather than placing any absolute limitations on the display properties in each of the areas.

For efficient rendering, FSR should be used for as much of the render pipeline as is possible; for instance, the Z-prepass, base pass/G-buffer rendering, a deferred lighting pass, and one or more post-fx passes. Each of these uses the output of previous passes as its input, and as such using FSR throughout streamlines the process.

While the use of FSR offers a number of advantages in the image rendering process, there are also drawbacks associated with making use of warped textures. In order to use these textures, one of two approaches have generally been used in previously proposed arrangements. The first of these is that of resolving (in other words, linearising or unwarping) the texture to a full-resolution target prior to its use. While this can be effective, and may be considered to be relatively simple due to shaders not needing to be modified, this is a hugely inefficient approach due to the increase in processing required.

The second approach is that of modifying the shader to sample the texture as if it were linear. This generally includes a modifying of the UVs in the shader to vary the sampling of the shader; this is often implemented using a look-up table. While this is more efficient than the first approach, this is still relatively inefficient as more shader instructions are required to be executed; this also increases the implementation complexity as the shaders need to be modified to account for the warping of the texture to be utilised.

Embodiments of the present disclosure therefore seek to provide the functionality and advantages of FSR without introducing significant inefficiencies or the need for end developers to modify shaders accordingly.

Figure 4 schematically illustrates an exemplary method for generating images for display using textures rendered using FSR in a simplified and efficient manner.

A step 400 comprises rendering a texture using FSR, and generating metadata indicating information about the FSR state when the texture was rendered. Textures rendered using FSR are generally warped, as equal-sized portions of an image are not represented by an equal-sized area in the rasterized texture. The metadata can simply indicate that FSR was used to render the texture, for example using a flag, or it can contain (or otherwise indicate) more detailed information about the FSR. For instance, the metadata may indicate a mapping between the rasterized and original texture to enable the warped texture to be de-warped. An example of such information is a look-up table, which could be stored (for instance) at the end of the texture or using extra pixel width/height in the texture where available. Multiple forms of metadata may be provided in some embodiments, such as a flag and a look-up table as described.

Look-up tables may be implemented in any of a number of ways as appropriate for a particular implementation; a particular implementation may use a number of tables of different types in any combination as appropriate for that implementation. In a first example, a look-up table (or multiple look-up tables) may be provided for the resolving of a target texture. These may comprise either screenspace locations or UVs for enabling an accurate look-up in the warped texture. In the former case, the locations may be indicated using a horizontal table and a vertical table that are sampled at each screen location.

A second example is that of a table which indicates the inverse operation for the warping of the target - in other words, the operation to unwarp the target texture. A third example is that of a look-up table that indicates a resolution scale at each screen location, the resolution being represented by a value that indicates the scale at that location between a minimum and maximum scale value. This third example may be particularly useful for altering kernel sizes for filters when applying post-processing effects to warped textures, for instance.

A step 410 comprises reading the metadata at a shader compiler to identify one or more properties of the texture in respect of FSR being performed. This may be performed at the same device as the rendering of the texture, or at a separate device as appropriate for a given implementation. For instance, the texture may be pre-rendered before distribution to processing devices that generate images for display. In some embodiments, the shader compiler may be operated to compile a shader in advance of its use - this may be performed by referring to look-up tables within the shader microcode, for instance. This compiled shader may then be distributed to a number of devices for use. Alternatively, or in addition, shader compiling may be performed for each instance of a shader - for instance, being performed locally at the device that is to use the shader.

A step 420 comprises the implementation of a branching within one or more shaders to account for any FSR that has been used to render textures. The implementation of the branching comprises the replacement of code in the shader where appropriate to enable the shader to handle FSR and non-FSR textures as required.

Based upon the metadata associated with the texture (or the lack of metadata), the modified shader can perform a default texture sample (if metadata is absent, or indicates no FSR was used to render the texture) or a modified texture sample (if metadata indicates the use of FSR). This modified texture sample performs an appropriate FSR resolve based upon information derived from the metadata about the FSR state. An FSR resolve is any operation that accounts for the warp of the texture - it is a linearisation of the texture.

In some embodiments, this branching may be implemented using function shaders. This comprises the use of a microcode jump to a different shader address - in other words, a redirection to a shader function that is used to handle textures with particular FSR properties. Alternatively, or in addition, the branching may be implemented using a static branching approach. This may be provided using a microcode jump to another part of the shader, thereby causing specific portions of the shader code to be executed in a particular order.

While in some embodiments the type of branching may be selected arbitrarily, in some cases the shader itself may be more suited to a particular type of branching due to the type of operations being performed or the like. For instance, a shader with a greater number of scalar registers in use may be more suited to the use of static branching than dynamic branching. This can reduce the bottlenecks associated with using too many scalar registers (as the dynamic branching would use more scalar registers than static branching), thereby increasing performance of the shader.

In some embodiments, an analysis of shaders may be performed so as to determine a preferred branching type. This may be performed in advance in some cases; alternatively, or in addition, an analysis may be performed of a number of modified shaders to identify if a modified shader has an acceptable performance level or to identify which of a plurality of candidates has the best performance (or satisfies some other metric). This may be implemented by performing a statistical analysis of a shader for scalar/vector register usage or the presence of bottlenecks and a determination of their causes, for instance. This could be performed based upon an analysis of the shader code, and/or by executing a shader using one or more sample textures to measure performance.

In some embodiments, the shader compiler may be operable to use one or more of each of these branching methods as appropriate for a given texture and shader combination.

A step 430 comprises generating images for display comprising the obtained texture, the generation of images including the use of one or more shaders comprising the branching. The generated images may comprise textures which were rendered FSR alongside textures which were rendered without.

This method, and those of other embodiments of the present disclosure, may be further advantageous in that no changes are required to be made by the end developer (that is, the developer of the content which uses the shaders to generate images for display). Instead, the shader compiler will insert code where necessary based upon the metadata associated with the textures. Such methods may also be advantageous with respect to shader pre-processor methods as they would not require the end developer to wrap samples of the texture with macros that account for the warping.

As noted above, the metadata can be provided in any of a number of formats. While in some cases the metadata can be provided as a part of the texture, or alongside the texture, in some embodiments it may be advantageous to provide a separate data file that includes FSR information for a number of textures. For instance, a file could be provided that lists FSR information for one or more textures (including the use of flags or look-up tables) that can be accessed independently of the texture or textures to which the FSR data corresponds. This may be particularly useful in the case that a plurality of textures each share FSR characteristics - for instance, if the same rasterization scheme is used for a plurality of textures. This may arise when encoding a number of textures for similar models, for example, as the same areas in each texture are likely to be assigned the same level of detail.

While the discussion above relates to the provision of metadata on a per-texture basis, in some embodiments it may be advantageous to provide metadata on a per-tile basis for a plurality of tiles within the texture. This can enable a more flexible approach in which FSR can be used for portions of a texture rather than the whole texture. In response to this, the shader compiler can control shader operation so as to perform a resolving of the texture on a per-tile basis rather than resolving the entire texture. This can increase the efficiency of the shading process in the case in which FSR is only used for a portion of the texture.

In some embodiments, shaders may also be modified to generate a different output in addition to any of the above processing. This may be particularly useful when a plurality of shaders are used in sequence to apply different effects. In such an embodiment, it may be advantageous to modify a shader to cause it to output metadata indicating how the texture or FSR state of the texture has changed within the shader. In some cases, this output data may be the same as the input data (for instance, if no further warping or unwarping has been performed). However, in other cases the operation of a shader may cause areas of an image to have a changed resolution which can be reflected in the FSR state metadata. By modifying a shader to output information about these changes, later shading operations can be performed more accurately and reliably. The output may be a modified version of the input metadata, or additional metadata indicating the effect of the operations performed on the texture, for instance. While embodiments of the present disclosure may be implemented utilising software exclusively, it is also considered that hardware acceleration for one or more steps may offer advantages in the execution of the shading process. For instance, in some embodiments the generation and/or writing of the metadata at the time of rasterizing the texture may be accelerated using hardware. Alternatively, or in addition, the read of the metadata may be accelerated in the same manner. This hardware acceleration may be performed in a similar manner to that in which UV offsets, level-of-detail, or texture dimensions can be selected in a texture sampler in the shader.

For instance, it may be advantageous in a number of embodiments that the linearisation of the texture may be performed as a part of the final rendering operations (such as upscaling, colour/gamma transforms, and reprojection). In these embodiments the texture could be passed to the hardware, without being unwarped, with corresponding metadata about the FSR state. The rendering hardware can be modified to perform the unwarping alongside these other operations, which can lead to a performance increase for the system compared to a software-only implementation. As a look-up table operation, the modification to include the unwarping process may be a straightforward one.

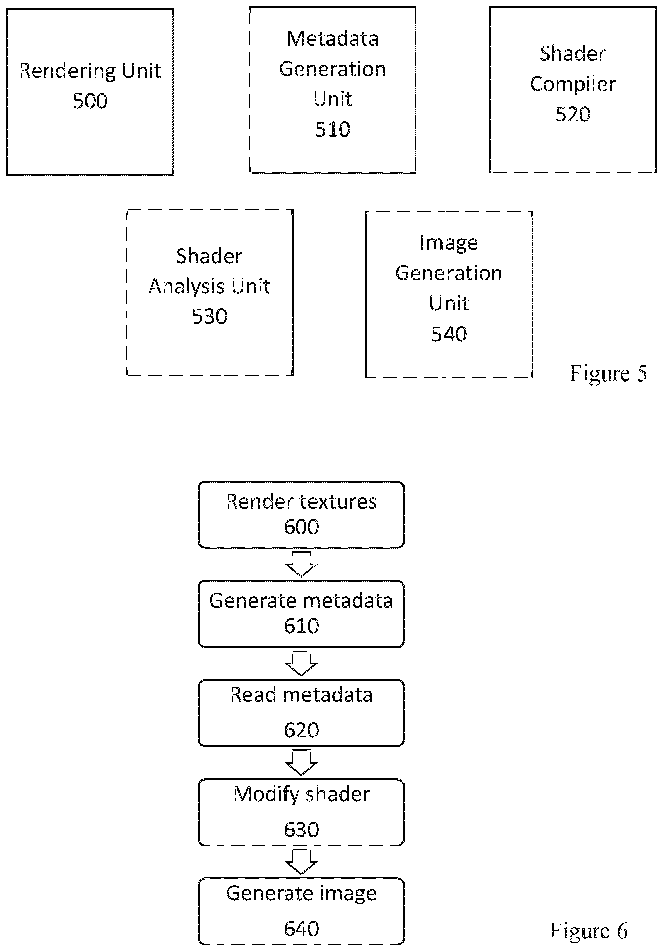

Figure 5 schematically illustrates an image processing system operable to generate one or more images for display, the system comprising a rendering unit 500, a metadata generation unit 510, a shader compiler 520, an optional shader analysis unit 530, and an image generation unit 540. These functional units may be implemented using hardware associated with multiple devices, rather than being limited to embodiments in which a single device (such as a computer or games console) implements the functions of each of these units.

The rendering unit 500 is operable to render one or more of a plurality of textures using flexible scale rasterization, FSR. In some embodiments these textures may correspond to one or more video game elements, although the techniques may be equally applicable to any content to be rendered. For instance, these textures may be generated as assets for any virtual content that is to be rendered for display to a viewer.

The metadata generation unit 510 is operable to generate metadata indicating one or more properties of the FSR used to render a corresponding texture. In some embodiments the metadata comprises a flag indicating the use of FSR when rendering a corresponding texture. Alternatively, or in addition, the metadata may comprise a look-up table describing a warping of a corresponding texture due to the use of FSR. The metadata may be embedded in the texture, such as in the margins of the texture that are otherwise unused; alternatively, or in addition, metadata is provided as a part of the texture file itself (that is, stored as data in the texture file rather than being embedded in the texture itself).

In some embodiments, the metadata generation unit 510 is operable to generate metadata indicative of one or more properties of the FSR used to render each of a plurality of textures. This may be performed in any suitable manner for a given implementation; a first example is that of providing a file (not stored in association with any particular texture) that comprises information about the FSR for a plurality of textures. A second example is that of data being encoded with a texture (either embedded or otherwise included as a part of the texture file) that indicates FSR properties and one or more other textures that share those same properties. In some cases, metadata may be associated with a particular texture that indicates the location of FSR information for that texture - such as referencing a data file or another texture. This may be advantageous in the case of textures corresponding to similar elements within content, as it may be the case that a similar FSR scheme is used for each of those textures.

The shader compiler 520 is operable to read the metadata, and to modify a shader to enable a texture sampling to be performed that includes an FSR resolve where the metadata indicates that a corresponding texture has been rendered with FSR. In some embodiments, the shader compiler 520 is operable to modify a plurality of shaders in a graphics pipeline. The FSR resolve comprises a linearisation of the rendered texture, or any other process that reduces or otherwise accounts for the warping of the texture as rendered.

The optional shader analysis unit 530 is operable to perform an analysis of a shader to determine the type of modification to be applied by the shader compiler. In the examples discussed above, the type of modification is considered to be static or dynamic branching but other types of modification may also be considered (for instance, modification to be compatible with a particular metadata format). The shader analysis unit 530 may be operable to perform a statistical analysis of the shader code and/or execute a shader using one or more sample textures to determine the performance of the shader. This may be performed for the shader being modified prior to or after the modification is performed by the shader compiler. In some embodiments, the shader compiler 520 may be operable to generate one or more candidate modified shaders using respective types of modification, and the shader analysis unit 530 is operable to analyse each of the candidate modified shaders and select a preferred type of modification in dependence upon the analysis. For instance, the shader compiler could generate modify a shader to generate two candidates (one with static and one with dynamic branching) which are each analysed to identify which offers the best performance or satisfies some other metric (such as having the smallest size or greater reliability).

The image generation unit 540 is operable to generate an image for display using at least one modified shader, the generated image including one or more of the plurality of textures. This image may be displayed, for example at a television or a head-mountable display device, and/or may be stored for display at a later time.

The arrangement of Figure 5 is an example of a processor (for example, a GPU and/or CPU located in a games console or any other computing device) that is operable to generate one or more images for display, and in particular is operable to:
render one or more of a plurality of textures using flexible scale rasterization, FSR;
generate metadata indicating one or more properties of the FSR used to render a corresponding texture;
read the metadata, and to modify a shader to enable a texture sampling to be performed that includes an FSR resolve where the metadata indicates that a corresponding texture has been rendered with FSR;
generate an image for display using at least one modified shader, the generated image including one or more of the plurality of textures.

In embodiments of the present disclosure, the arrangement of Figure 5 may be implemented using two or more processors or processing units. These may be located at different devices, such as a computer being used to render one or more textures using FSR and a separate computer being used to generate images for display. The rendered textures may be transferred from the first computer to the second using removable storage media, for instance, or a network connection.

Figure 6 schematically illustrates a method for generating one or more images for display.

A step 600 comprises rendering one or more of a plurality of textures using flexible scale rasterization, FSR.

A step 610 comprises generating metadata indicating one or more properties of the FSR used to render a corresponding texture.

A step 620 comprises reading the metadata at a shader compiler.

A step 630 comprises modifying a shader to enable a texture sampling to be performed that includes an FSR resolve where the metadata indicates that a corresponding texture has been rendered with FSR.

A step 640 comprises generating an image for display using at least one modified shader, the generated image including one or more of the plurality of textures.

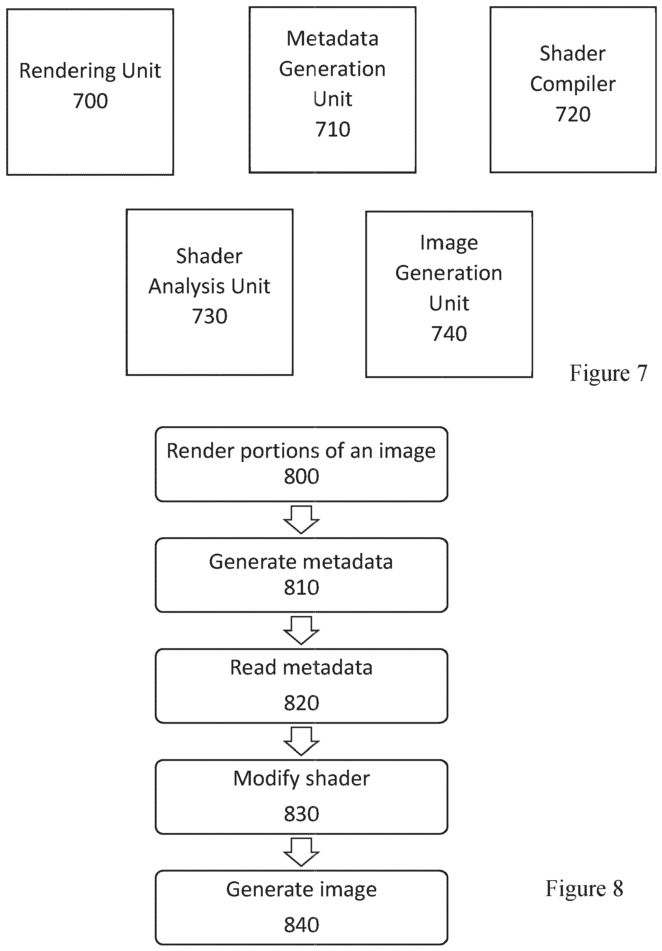

Figure 7 schematically illustrates an image processing system operable to generate one or more images for display, the system comprising a rendering unit 700, a metadata generation unit 710, a shader compiler 720, an optional shader analysis unit 730, and an image generation unit 740. These functional units may be implemented using hardware associated with multiple devices, rather than being limited to embodiments in which a single device (such as a computer or games console) implements the functions of each of these units.

The units of Figure 7 function in a broadly similar manner to those described with reference to Figure 5, with the primary focus of the arrangement of Figure 7 being implementations in which different FSR settings are able to be applied to different parts of a particular render target. This means that a particular texture or image region can be rendered using multiple different FSR settings, which can be communicated separately (for instance, using a number of different look-up tables each corresponding to one or more FSR settings or parameters) or using a single data structure (such as a single look-up table that represents a plurality of different FSR settings or parameters).

Such an arrangement may be advantageous in a number of cases; for instance, when multiple sources of image content are used to generate a single display image such as an image and an overlaid user interface. Rather than rendering each of these separately and then compositing the respective areas of each to generate an image, a single resolve may be performed when multiple FSR settings are supported. Similarly, an image generated by rendering a scene and then performing another pass for lighting or particles may benefit from the use of the multiple FSR support.

The rendering unit 700 is operable to render one or more image portions (such as pixels, groups of pixels, tiles, textures, and/or portions of textures) using a plurality of flexible scale rasterization, FSR, schemes (an FSR scheme being considered to be an application of FSR using particular settings). In some embodiments these image portions may correspond to one or more video game elements, although the techniques may be equally applicable to any content to be rendered. For instance, textures (as examples of image portions) may be generated as assets for any virtual content that is to be rendered for display to a viewer.

In particular, the rendering unit 700 may be operable to render textures using a plurality of FSR schemes for a single texture; it is not considered essential that each texture is rendered using multiple FSR schemes, as some may be rendered without FSR or using a single FSR scheme. Similarly, a group of pixels or a tile may be rendered using a single or multiple FSR schemes; the mapping between image portions and FSR schemes may be selected freely as desired for the generation of an image for display.

The metadata generation unit 710 is operable to generate metadata indicating one or more properties of each of the FSR schemes used to render a particular image portion. Here, an image portion may refer to any part of an image; for instance, pixels, tiles, or portions of a texture. The metadata may also comprise a flag indicating the use of FSR when rendering a corresponding image portion, although this could be inferred or assumed as appropriate (for instance, the presence of a look-up table could be used to infer the use of FSR. The metadata may be embedded in the image portion, such as in the margins of a texture (where the margins would otherwise be unused); alternatively, or in addition, metadata is provided as a part of a texture file itself (that is, stored as data in the texture file rather than being embedded in the texture itself).

In some embodiments, the metadata generation unit 710 is operable to generate metadata indicative of one or more properties of the FSR schemes used to render each of a plurality of image portions. This may be performed in any suitable manner for a given implementation; a first example is that of providing a file (not stored in association with any particular image portion) that comprises information about the one or more FSR schemes used for the plurality of image portions. A second example is that of data being encoded with an image portion (either embedded or otherwise included as a part of the image portion file) that indicates FSR properties and one or more other image portions that share those same properties. In some cases, metadata may be associated with a particular image portion that indicates the location of FSR information for that image portion - such as referencing a data file or another image portion. This may be advantageous in the case of image portions corresponding to similar elements within content, as it may be the case that a similar FSR scheme (or schemes) is used for each of those image portions.

In some examples, metadata may be associated with a particular pixel, texture, tile, or any other portion of an image to be rendered, that indicates a correspondence with a particular set of FSR parameters (that is, a particular FSR scheme). For instance, the metadata may comprise an index that can be used to identify a particular FSR scheme, identify a particular FSR scheme from amongst a number of predefined FSR schemes, provide parameters for such a scheme directly, or to identify a file location or the like that indicates where FSR parameters may be found. A mapping between a set of FSR parameters and corresponding elements may be maintained using a multiple render target style arrangement, in some embodiments, wherein the FSR parameters are indicated in each draw call (or otherwise identified).

The metadata may be provided in any of a number of different formats, one example of which is a look-up table that indicates properties of an FSR scheme. In some embodiments, the metadata may comprise a plurality of look-up tables each describing a warping of a corresponding image portion due to the use of FSR - this may be a look-up table for each FSR scheme, for instance. The description of a warping may be represented in any suitable form; this is considered to be a descriptor for the FSR scheme as it describes the changes resulting from implementing the corresponding FSR scheme. In the case that multiple look-up tables are provided, it is considered that these may be stored as an array that can be referenced during the shading process.

While the above discussion has referred to the use of multiple FSR schemes each representing the FSR scheme for a particular part of an image, it is also considered that these may be combined in some cases. For instance, a single look-up table describing a warping of a corresponding image portion due to the use of FSR for each of the FSR schemes used may be provided - that is to say that a look-up table may be used to provide details of two or more FSR schemes. In some embodiments there may be a plurality of look-up tables, some of which indicate the properties of single FSR schemes and some which indicate the properties of multiple FSR schemes.

In such examples, a single data structure may be generated in an additional merging step which may be performed by the rendering unit 700 or the metadata generation unit 710 or a dedicated separate functional unit. This may comprise the merging of a plurality of look-up tables, for instance, to generate a single look-up table that is representative of the characteristics of each of the plurality of look-up tables (and therefore representative of a plurality of render targets or even the whole of an image to be rendered). In some embodiments, this merging may comprise the selection of values from a first look-up table in a first area and from a second look-up table in a second area. For instance, if a scene and a user interface are being rendered, a composite look-up table may be generated by using values from a first look-up table for areas in which the UI is present and from a second look-up table where the UI is not present.

The shader compiler 720 is operable to read the metadata, and to modify a shader to enable a image portion sampling to be performed that includes a corresponding FSR resolve where the metadata indicates that the particular image portion has been rendered with FSR. In some embodiments, the shader compiler 520 is operable to modify a plurality of shaders in a graphics pipeline. The FSR resolve comprises a linearisation of the rendered image portion (this may be particularly suitable in the case in which the image portion is a texture), or any other process that reduces or otherwise accounts for the warping of the image portion as rendered. It is noted that in using multiple look-up tables, or a composite look-up table (or alternative data structures), a single FSR resolve can be used for a number of different render targets and in some cases an entire image. This can result in a faster and more efficient image generation process.

The optional shader analysis unit 730 is operable to perform an analysis of a shader to determine the type of modification to be applied by the shader compiler. In the examples discussed above, the type of modification is considered to be static or dynamic branching but other types of modification may also be considered (for instance, modification to be compatible with a particular metadata format). The shader analysis unit 530 may be operable to perform a statistical analysis of the shader code and/or execute a shader using one or more sample image portions to determine the performance of the shader. This may be performed for the shader being modified prior to or after the modification is performed by the shader compiler. In some embodiments, the shader compiler 520 may be operable to generate one or more candidate modified shaders using respective types of modification, and the shader analysis unit 530 is operable to analyse each of the candidate modified shaders and select a preferred type of modification in dependence upon the analysis. For instance, the shader compiler could generate modify a shader to generate two candidates (one with static and one with dynamic branching) which are each analysed to identify which offers the best performance or satisfies some other metric (such as having the smallest size or greater reliability).

The image generation unit 740 is operable to generate an image for display using at least one modified shader, the generated image including one or more of the plurality of image portions. This image may be displayed, for example at a television or a head-mountable display device, and/or may be stored for display at a later time.

The arrangement of Figure 7 is an example of a processor (for example, a GPU and/or CPU located in a games console or any other computing device) that is operable to generate one or more images for display, and in particular is operable to:
render one or more of a plurality of image portions using a plurality of flexible scale rasterization, FSR, schemes;
generate metadata indicating one or more properties of each of the FSR schemes used to render a particular image portion;
read the metadata, and to modify a shader to enable a image portion sampling to be performed that includes a corresponding FSR resolve where the metadata indicates that the particular image portion has been rendered with FSR; and
generate an image for display using at least one modified shader, the generated image including one or more of the plurality of image portions.

Figure 8 schematically illustrates a method for generating one or more images for display.

A step 800 comprises rendering one or more of a plurality of image portions using a plurality of flexible scale rasterization, FSR, schemes.

A step 810 comprises generating metadata indicating one or more properties of each of the FSR schemes used to render a particular image portion.

A step 820 comprises reading the metadata at a shader compiler.

A step 830 comprises modifying a shader to enable a image portion sampling to be performed that includes a corresponding FSR resolve where the metadata indicates that the particular image portion has been rendered with FSR.

A step 840 comprises generating an image for display using at least one modified shader, the generated image including one or more of the plurality of image portions.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention.

## Claims

1. An image processing system operable to generate one or more images for display, the system comprising:
a rendering unit (700) operable to render one or more portions of an image using a plurality of flexible scale rasterization, FSR, schemes, wherein FSR is a method by which image content is generated using a varying rasterization rate for different areas of the image content, with the rate being dependent upon the position of each area within the image content, and wherein an FSR scheme comprises particular settings for a corresponding application of FSR;
a metadata generation unit (710) operable to generate metadata indicating one or more properties of each of the FSR schemes used to render a particular image portion; **characterised by**
a shader compiler (720) operable to read the metadata, and to modify a shader to enable an image portion sampling to be performed that includes a corresponding FSR resolve where the metadata indicates that the particular image portion has been rendered with FSR, wherein the FSR resolve comprises a linearisation of the image portion; and
an image generation unit (740) operable to generate an image for display using at least one modified shader, the generated image including one or more of the plurality of image portions.

2. A system according to claim 1, wherein the image portions comprise one or more pixels, tiles, textures, and/or parts of textures.

3. A system according to any preceding claim, wherein the metadata comprises a flag indicating the use of FSR when rendering a corresponding image portion.

4. A system according to any preceding claim, wherein the metadata comprises a plurality of look-up tables each describing a warping of a corresponding image portion due to the use of FSR, or a single look-up table describing a warping of a corresponding image portion due to the use of FSR for each of the FSR schemes used.

5. A system according to any preceding claim, wherein the metadata is embedded in the image portion.

6. A system according to any preceding claim, wherein the metadata is provided as a part of the image portion file.

7. A system according to any preceding claim, wherein the metadata generation unit is operable to generate metadata indicative of one or more properties of the FSR schemes used to render each of a plurality of image portions.

8. A system according to any preceding claim, wherein the shader compiler is operable to modify a plurality of shaders in a graphics pipeline.

9. A system according to any preceding claim, comprising a shader analysis unit (730) operable to perform an analysis of a shader to determine the type of modification to be applied by the shader compiler.

10. A system according to claim 9, wherein the shader analysis unit is operable to perform a statistical analysis of the shader code and/or execute a shader using one or more sample image portions to determine the performance of the shader.

11. A system according to claim 9 or 10, wherein
the shader compiler is operable to generate one or more candidate modified shaders using respective types of modification, and
the shader analysis unit is operable to analyse each of the candidate modified shaders, and select a preferred type of modification in dependence upon the analysis.

12. A computer-implemented method for generating one or more images for display, the method comprising:
rendering (800) one or more portions of an image using a plurality of flexible scale rasterization, FSR, schemes, wherein FSR is a method by which image content is generated using a varying rasterization rate for different areas of the image content, with the rate being dependent upon the position of each area within the image content, and wherein an FSR scheme comprises particular settings for a corresponding application of FSR;
generating (810) metadata indicating one or more properties of each of the FSR schemes used to render a particular image portion;
reading (820) the metadata at a shader compiler; **characterised by**
modifying (830) a shader to enable an image portion sampling to be performed that includes a corresponding FSR resolve where the metadata indicates that the particular image portion has been rendered with FSR, wherein the FSR resolve comprises a linearisation of the image portion; and
generating (840) an image for display using at least one modified shader, the generated image including one or more of the plurality of image portions.

13. Computer software comprising instructions which, when executed by a computer, causes the computer to carry out the method of claim 12.

14. A non-transitory machine-readable storage medium which stores computer software according to claim 13.

## Patentansprüche

1. Bildverarbeitungssystem, das betriebsfähig ist, um ein oder mehrere Bilder zur Anzeige zu erzeugen, wobei das System Folgendes umfasst:
eine Rendering-Einheit (700), die betriebsfähig ist, um einen oder mehrere Abschnitte eines Bildes unter Verwendung einer Vielzahl von FSR-Schemata (Flexible Scale Rasterization) zu rendern, wobei FSR ein Verfahren ist, bei dem Bildinhalt unter Verwendung einer variierenden Rasterisierungsrate für verschiedene Bereiche des Bildinhalts erzeugt wird, wobei die Rate von der Position jedes Bereichs innerhalb des Bildinhalts abhängt, und wobei ein FSR-Schema bestimmte Einstellungen für eine entsprechende Anwendung von FSR umfasst;
eine Metadaten-Erzeugungseinheit (710), die betriebsfähig ist, um Metadaten zu erzeugen, die eine oder mehrere Eigenschaften jedes der FSR-Schemata angeben, die zum Rendern eines bestimmten Bildabschnitts verwendet werden; **gekennzeichnet durch**
einen Shader-Compiler (720), der betriebsfähig ist, um die Metadaten zu lesen und einen Shader zu modifizieren, um die Durchführung einer Bildabschnittsabtastung zu ermöglichen, die eine entsprechende FSR-Auflösung aufweist, wobei die Metadaten angeben, dass der bestimmte Bildabschnitt mit FSR gerendert wurde, wobei die FSR-Auflösung eine Linearisierung des Bildabschnitts umfasst; und
eine Bilderzeugungseinheit (740), die betriebsfähig ist, um unter Verwendung mindestens eines modifizierten Shaders ein Bild zur Anzeige zu erzeugen, wobei das erzeugte Bild einen oder mehrere der Vielzahl von Bildabschnitten einschließt.

2. System nach Anspruch 1, wobei die Bildabschnitte ein oder mehrere Pixel, Kacheln, Texturen und/oder Teile von Texturen umfassen.

3. System nach einem der vorstehenden Ansprüche, wobei die Metadaten ein Flag umfassen, das auf die Verwendung von FSR beim Rendern eines entsprechenden Bildabschnitts hinweist.

4. System nach einem der vorstehenden Ansprüche, wobei die Metadaten eine Vielzahl von Nachschlagetabellen umfassen, die jeweils eine Verzerrung eines entsprechenden Bildabschnitts aufgrund der Verwendung von FSR beschreiben, oder eine einzelne Nachschlagetabelle, die eine Verzerrung eines entsprechenden Bildabschnitts aufgrund der Verwendung von FSR für jedes der verwendeten FSR-Schemata beschreibt.

5. System nach einem der vorstehenden Ansprüche, wobei die Metadaten in den Bildabschnitt eingebettet sind.

6. System nach einem der vorstehenden Ansprüche, wobei die Metadaten als Teil der Bildabschnittdatei bereitgestellt werden.

7. System nach einem der vorstehenden Ansprüche, wobei die Metadaten-Erzeugungseinheit betriebsfähig ist, um Metadaten zu erzeugen, die eine oder mehrere Eigenschaften der FSR-Schemata angeben, die zum Rendern jedes einer Vielzahl von Bildabschnitten verwendet werden.

8. System nach einem der vorstehenden Ansprüche, wobei der Shader-Compiler betriebsfähig ist, um eine Vielzahl von Shadern in einer Grafikpipeline zu modifizieren.

9. System nach einem der vorstehenden Ansprüche, umfassend eine Shader-Analyseeinheit (730), die betriebsfähig ist, um eine Analyse eines Shaders durchzuführen, um den Typ der durch den Shader-Compiler anzuwendenden Modifikation zu bestimmen.

10. System nach Anspruch 9, wobei die Shader-Analyseeinheit betriebsfähig ist, um eine statistische Analyse des Shader-Codes durchzuführen und/oder einen Shader unter Verwendung eines oder mehrerer Beispielbildabschnitte auszuführen, um die Leistung des Shaders zu bestimmen.

11. System nach Anspruch 9 oder 10, wobei
der Shader-Compiler betriebsfähig ist, um einen oder mehrere in Frage kommende modifizierte Shader unter Verwendung jeweiliger Modifikationstypen zu erzeugen, und
die Shader-Analyseeinheit betriebsfähig ist, um jeden der in Frage kommenden modifizierten Shader zu analysieren und in Abhängigkeit von der Analyse einen bevorzugten Modifikationstyp auszuwählen.

12. Computerimplementiertes Verfahren zum Erzeugen eines oder mehrerer Bilder zur Anzeige, wobei das Verfahren Folgendes umfasst:
Rendern (800) eines oder mehrerer Abschnitte eines Bildes unter Verwendung einer Vielzahl von FSR-Schemata (Flexible Scale Rasterization), wobei FSR ein Verfahren ist, bei dem Bildinhalt unter Verwendung einer variierenden Rasterisierungsrate für verschiedene Bereiche des Bildinhalts erzeugt wird, wobei die Rate von der Position jedes Bereichs innerhalb des Bildinhalts abhängt, und wobei ein FSR-Schema bestimmte Einstellungen für eine entsprechende Anwendung von FSR umfasst;
Erzeugen (810) von Metadaten, die eine oder mehrere Eigenschaften jedes der FSR-Schemata angeben, die zum Rendern eines bestimmten Bildabschnitts verwendet werden;
Lesen (820) der Metadaten in einem Shader-Compiler;
**gekennzeichnet durch**
Modifizieren (830) eines Shaders, um die Durchführung einer Bildabschnittsabtastung zu ermöglichen, die eine entsprechende FSR-Auflösung aufweist, wobei die Metadaten angeben, dass der bestimmte Bildabschnitt mit FSR gerendert wurde, wobei die FSR-Auflösung eine Linearisierung des Bildabschnitts umfasst; und
Erzeugen (840) eines Bildes zur Anzeige unter Verwendung mindestens eines modifizierten Shaders, wobei das erzeugte Bild einen oder mehrere der Vielzahl von Bildabschnitten einschließt.

13. Computersoftware umfassend Anweisungen, die, wenn sie durch einen Computer ausgeführt werden, den Computer veranlassen, das Verfahren nach Anspruch 12 durchzuführen.

14. Nichtflüchtiges, maschinenlesbares Speichermedium, das Computersoftware nach Anspruch 13 speichert.

## Revendications

1. Système de traitement d'image permettant de générer une ou plusieurs images à afficher, le système comprenant :
une unité de rendu (700) permettant de rendre une ou plusieurs parties d'une image à l'aide d'une pluralité de schémas de tramage à échelle flexible, FSR, dans lequel le FSR est un procédé par lequel un contenu d'image est généré à l'aide d'un taux de tramage variable pour différentes zones du contenu d'image, le taux dépendant de la position de chaque zone à l'intérieur du contenu d'image, et dans lequel un schéma FSR comprend des paramètres particuliers pour une application correspondante de FSR ;
une unité de génération de métadonnées (710) permettant de générer des métadonnées indiquant une ou plusieurs propriétés de chacun des schémas FSR utilisés pour rendre une partie d'image particulière ; **caractérisé par**
un compilateur de nuanceur (720) permettant de lire les métadonnées, et de modifier un nuanceur pour permettre l'exécution d'un échantillonnage de partie d'image qui comporte une résolution FSR correspondante, dans lequel les métadonnées indiquent que la partie d'image particulière a été rendue avec le FSR, dans lequel la résolution FSR comprend une linéarisation de la partie d'image ; et
une unité de génération d'image (740) permettant de générer une image à afficher à l'aide d'au moins un nuanceur modifié, l'image générée comportant l'une ou plusieurs de la pluralité de parties d'image.

2. Système selon la revendication 1, dans lequel les parties d'image comprennent un(e) ou plusieurs pixels, tuiles, textures et/ou parties de texture.

3. Système selon l'une quelconque revendication précédente, dans lequel les métadonnées comprennent un drapeau indiquant l'utilisation de FSR lors du rendu d'une partie d'image correspondante.

4. Système selon l'une quelconque revendication précédente, dans lequel les métadonnées comprennent une pluralité de tables de recherche décrivant chacune une déformation d'une partie d'image correspondante due à l'utilisation de FSR, ou une seule table de recherche décrivant une déformation d'une partie d'image correspondante due à l'utilisation de FSR pour chacun des schémas FSR utilisés.

5. Système selon l'une quelconque revendication précédente, dans lequel les métadonnées sont intégrées dans la partie d'image.

6. Système selon l'une quelconque revendication précédente, dans lequel les métadonnées sont fournies en tant que partie du fichier de partie d'image.

7. Système selon l'une quelconque revendication précédente, dans lequel l'unité de génération de métadonnées permet de générer des métadonnées indicatives d'une ou plusieurs propriétés des schémas FSR utilisés pour rendre chacune d'une pluralité de parties d'image.

8. Système selon l'une quelconque revendication précédente, dans lequel le compilateur de nuanceur permet de modifier une pluralité de nuanceurs dans un pipeline graphique.

9. Système selon l'une quelconque revendication précédente, comprenant une unité d'analyse de nuanceur (730) permettant d'effectuer une analyse d'un nuanceur afin de déterminer le type de modification à appliquer par le compilateur de nuanceur.

10. Système selon la revendication 9, dans lequel l'unité d'analyse de nuanceur permet d'effectuer une analyse statistique du code de nuanceur et/ou d'exécuter un nuanceur à l'aide d'un ou plusieurs échantillons de partie d'image afin de déterminer la performance du nuanceur.

11. Système selon la revendication 9 ou 10, dans lequel
le compilateur de nuanceur permet de générer un ou plusieurs nuanceurs modifiés candidats utilisant des types de modification respectifs, et
l'unité d'analyse de nuanceur permet d'analyser chacun des nuanceur modifiés candidats, et de sélectionner un type de modification préféré en fonction de l'analyse.

12. Procédé mis en œuvre par ordinateur destiné à générer une ou plusieurs images à afficher, le procédé comprenant :
le rendu (800) d'une ou plusieurs parties d'une image à l'aide d'une pluralité de schémas de tramage à échelle flexible, FSR, dans lequel le FSR est un procédé par lequel un contenu d'image est généré à l'aide d'un taux de tramage variable pour différentes zones du contenu d'image, le taux dépendant de la position de chaque zone à l'intérieur du contenu d'image, et dans lequel un schéma FSR comprend des paramètres particuliers pour une application correspondante de FSR ;
la génération (810) de métadonnées indiquant une ou plusieurs propriétés de chacun des schémas FSR utilisés pour rendre une partie d'image particulière ;
la lecture (820) des métadonnées au niveau d'un compilateur de nuanceur ; **caractérisé par**
la modification (830) d'un nuanceur pour permettre l'exécution d'un échantillonnage de partie d'image qui comporte une résolution FSR correspondante, dans lequel les métadonnées indiquent que la partie d'image particulière a été rendue avec le FSR, dans lequel la résolution FSR comprend une linéarisation de la partie d'image ; et
la génération (840) d'une image à afficher à l'aide d'au moins un nuanceur modifié, l'image générée comportant l'une ou plusieurs de la pluralité de parties d'image.

13. Logiciel informatique comprenant des instructions qui, lorsqu'elles sont exécutées par un ordinateur, amènent l'ordinateur à mettre en oeuvre le procédé selon la revendication 12.

14. Support de stockage lisible par machine non transitoire qui stocke un logiciel informatique selon la revendication 13.
